# FASCICULE DE BREVET EUROPEEN

(11) **EP 3 092 374 B1**
(45) Date de publication et mention de la délivrance du brevet: **15.11.2017**
(21) Numéro de dépôt: 15702541.2
(22) Date de dépôt: 08.01.2015
(51) Int. Cl.: F01D 25/24, F02C 7/25

(54) **PROTECTION CONTRE LE FEU D'UNE PIÈCE EN MATÉRIAU COMPOSITE TISSÉ TRIDIMENSIONNEL**
BRANDSCHUTZ EINES TEILS AUS EINEM DREIDIMENSIONALEN GEWEBTEN VERBUNDSTOFF
FIRE PROTECTION OF A PART MADE OF A THREE-DIMENSIONAL WOVEN COMPOSITE MATERIAL

(30) Priorité: 09.01.2014 FR 1450148
(43) Date de publication de la demande: 16.11.2016
(73) Titulaire: SNECMA, 75015 Paris (FR); SAFRAN, 75015 Paris (FR)
(72) Inventeur: MANDEL, Robin, F-77550 Moissy-Cramayel Cedex (FR); GONCALVES, Emilie, F-77550 Moissy-Cramayel Cedex (FR); LE BORGNE, Bénédicte, F-77550 Moissy-Cramayel Cedex (FR); QUILLENT, Hélène, F-77550 Moissy-Cramayel Cedex (FR); RIETSCH, Jean-Christophe, F-77550 Moissy-Cramayel Cedex (FR)
(74) Mandataire: Regimbeau
(86) Numéro de dépôt international: PCT/FR2015/050039
(87) Numéro de publication internationale: WO 2015/104503

(56) Documents cités:
- EP-A1- 2 017 072
- WO-A1-99/48837
- US-A1- 2005 076 504

## Description

### DOMAINE DE L'INVENTION

L'invention concerne de manière générale une turbine à gaz pour un moteur aéronautique comprenant une pièce en matériau composite comprenant un renfort fibreux densifié par une matrice d'une turbine à gaz telle qu'un carter de rétention pour soufflante et son procédé de fabrication associé.

### ARRIERE-PLAN TECHNOLOGIQUE

Un moteur à turbine à gaz comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

Le moteur est logé à l'intérieur d'un carter comprenant plusieurs parties correspondant à différents éléments du moteur. Ainsi, la soufflante est entourée par exemple par un carter de soufflante et comprend au niveau de ses extrémités axiales des brides. Une première bride, dite amont, permet la fixation d'une manche d'entrée d'air au carter, tandis que la deuxième bride, dite aval, permet le raccordement du carter de soufflante avec un carter intermédiaire. Ici, l'amont et l'aval sont définis par le sens d'écoulement des gaz dans la turbine à gaz.

Le moteur peut notamment comprendre une ou plusieurs pièces réalisées dans des matériaux composites, lesdits matériaux composites comprenant un renfort fibreux densifié par une matrice polymère.

C'est en particulier le cas du carter de soufflante. Par exemple, il a été proposé dans le document FR 2 913 053 de former le renfort fibreux par un enroulement en couches superposées sur un mandrin d'une texture fibreuse obtenue par tissage tridimensionnel avec épaisseur évolutive. Cette technique permet en outre d'intégrer un bouclier de rétention au carter par simple augmentation localisée d'épaisseur.

Le renfort fibreux comprend des fibres, notamment en carbone, verre, aramide ou céramique. La matrice quant à elle est typiquement une matrice polymère, par exemple époxyde, bismaléimide ou polyimide.

Toutefois, l'implantation de pièces en matériau composite en zone feu impose de répondre à différentes exigences réglementaires de tenue au feu. Ces exigences incluent d'une part le maintien de propriétés mécaniques de la pièce durant et après le feu et d'autre part l'extinction immédiate de la pièce à la fin de l'événement feu. Ainsi, les premiers essais feu effectués sur des carters de soufflante en matériau composite ont montré que le matériau utilisé n'est pas intrinsèquement auto-extinguible (ou ignifugeants) et requiert donc impérativement une protection.

Il a déjà été proposé, dans le document EP 2 017 072, un procédé de fabrication d'un article en matériau composite résistant au feu comprenant une couche principale et une couche contre le feu réalisées en matériau composite avec une matrice organique, qui sont traitées thermiquement simultanément afin de polymériser leur matrice.

Dans le cas du carter de soufflante, la pièce brute obtenue après densification de la préforme fibreuse est généralement usinée pour obtenir la géométrie finale de la pièce. En particulier, lors de cet usinage, la zone des brides est amputée de plusieurs millimètres de sorte qu'il est impossible d'utiliser une protection contre le feu co-injectée avec la préforme car celle-ci serait éliminée dans plusieurs zones et ne protégerait donc pas suffisamment le carter de soufflante contre le feu.

Les solutions anti-feu actuellement connues sont généralement capables de couvrir le problème de résistance des structures au feu mais ne permettent pas de résoudre la problématique d'auto-extinction. Les seules solutions connues permettant de garantir l'auto-extinction des pièces en matériau composite consistent à isoler suffisamment le matériau pour empêcher son inflammation. Néanmoins, ces solutions sont lourdes à mettre en oeuvre et volumineuses, de sorte qu'elles ne sont pas envisageables dans un moteur de turbine à gaz.

Il a par ailleurs été proposé dans le document US 2005/0076504 un procédé de fabrication d'une structure en matériau composite, au cours duquel une couche de CMC (matériau composite comprenant une matrice céramique) est préformée et appliquée sur un mandrin puis assemblée avec des parties de la structure.

Enfin, le document WO 99/48837décrit un procédé de fabrication d'un revêtement isolant en matériau céramique.

### RESUME DE L'INVENTION

Un objectif de l'invention est donc de garantir l'auto-extinction d'une pièce d'un moteur de turbine à gaz en matériau composite comprenant un renfort fibreux densifié par une matrice polymère, par exemple d'un carter de soufflante, de manière industrialisable, fiable et efficace, sans dégrader la tenue mécanique de la pièce.

Pour cela, l'invention propose un procédé de protection contre le feu d'une pièce d'un moteur de turbine à gaz réalisée dans un matériau composite comprenant un renfort fibreux principal densifié par une matrice principale,
le procédé de protection comprenant les étapes suivantes :
- préformage d'un lé de préimprégné de manière à lui conférer une forme correspondant à la forme d'une surface de la pièce à protéger contre le feu, ledit lé de préimprégné comprenant un renfort fibreux secondaire densifié par une matrice secondaire,
- application du lé de préimprégné ainsi préformé sur la pièce, et
- fixation du lé de préimprégné sur la surface par traitement thermique de la pièce munie dudit lé de préimprégné afin d'obtenir une couche de protection contre le feu.

Certaines caractéristiques préférées mais non limitatives du procédé décrit ci-dessus sont les suivantes :
- le traitement thermique est réalisé à une température inférieure à une température de dégradation de la pièce,
- le renfort fibreux secondaire comprend des fibres de verre,
- la matrice secondaire comprend une résine epoxy, une résine phénolique et/ou une résine cyanate ester, par exemple une résine du type HexPly®M26T/50%035,
- le lé de préimprégné est préformé par secteurs d'anneau, lesdits secteurs d'anneau étant appliqués sur la surface de la pièce à protéger avec chevauchement,
- la matrice secondaire comprend une résine thermoplastique et l'étape de préformage comprend les sous-étapes suivantes : préformage du lé de préimprégné à une température supérieure à la température de transition vitreuse de la résine thermodurcissable, afin de lui conférer la forme de la surface de la pièce à protéger ; application d'un film de colle entre le lé de préimprégné préformé et la surface de la pièce à protéger ; et dans lequel l'étape de fixation par traitement thermique est configurée pour polymériser le film de colle,
- le procédé comprend outre une sous-étape au cours de laquelle on réalise un soyage sur les secteurs d'anneau afin d'assurer le chevauchement des secteurs d'anneau entre eux,
- la matrice secondaire comprend une résine thermodurcissable et l'étape de préformage comprend une sous-étape de préformage du lé de préimprégné à une température inférieure à la température de polymérisation de la matrice principale, afin de lui conférer la forme de la surface de la pièce à protéger, et dans lequel l'étape de fixation par traitement thermique est configurée pour polymériser la résine thermodurcissable,
- la couche de protection comprend deux lés de préimprégné superposés, et
- les lés de préimprégné sont superposés et préformés simultanément au cours de l'étape de préformage.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est illustre un exemple de pièce de moteur de turbine à gaz sur laquelle sont appliqués des exemples de réalisation de secteurs d'anneau de lés de préimprégnés préformés,
La figure 2 est une vue en perspective d'un secteur d'anneau d'un lé de préimprégné préformé de la figure 1, et

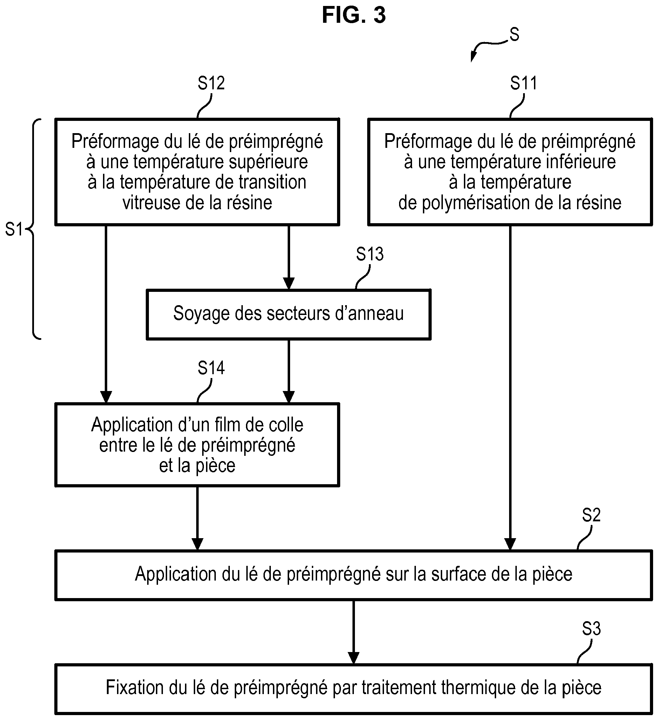

La figure 3 est un organigramme représentant différentes étapes d'un exemple de réalisation du procédé de protection d'une pièce de moteur de turbine à gaz conforme à l'invention.

### DESCRIPTION DETAILLEE D'UN MODE DE REALISATION

Dans ce qui suit, l'invention va plus particulièrement être décrite dans le cas d'un carter de soufflante d'un moteur de turbine à gaz, réalisé dans un matériau composite comprenant un renfort fibreux tissé, notamment tridimensionnel, densifié par une matrice polymère. Toutefois, on comprendra que l'invention n'est pas limitée à la réalisation d'un tel carter de soufflante mais couvre également toute pièce d'un moteur à turbine à gaz réalisée dans un tel matériau composite.

Un carter de soufflante 1 comprend un fût 10 globalement cylindrique, présentant une direction principale s'étendant selon un axe longitudinal X sensiblement parallèle à l'écoulement des gaz. Le fût 10 du carter peut présenter une épaisseur variable, comme indiqué dans le document FR 2 913 053, et peut être muni d'une bride amont 12 et d'une bride aval 14 au niveau de ses extrémités amont et aval, respectivement, afin de permettre son montage et sa liaison avec d'autres pièces, dont la manche d'entrée d'air, le carter intermédiaire ou encore la virole annulaire.

La bride amont 12 et la bride aval 14 sont de forme annulaire et s'étendent coaxialement à l'axe longitudinal X du carter de soufflante 1.

La bride amont 12 comprend une face radiale amont (en regard de l'écoulement) et une face radiale aval (en regard de la bride aval 14). La bride amont 12 comprend en outre un sommet annulaire, s'étendant coaxialement à l'axe longitudinal X entre la face amont et la face aval, à distance du fût 10. De façon analogue, la bride aval 14 présente une face radiale amont (en regard de la bride amont 12) et une face radiale aval (opposée à la face amont). La bride aval 14 comprend en outre un sommet annulaire, s'étendant coaxialement à l'axe longitudinal X entre sa face amont et sa face aval, à distance du fût 10.

Ici, le carter de soufflante 1 est réalisé en matériau composite comprenant un renfort fibreux principal densifié par une matrice principale. Le renfort principal peut notamment comprendre des fibres de carbone, de verre, d'aramide ou de céramique et la matrice peut être en matériau polymère, par exemple du type époxide, bismaélique ou polyimide.

Le renfort principal peut être formé par enroulement sur un mandrin d'une texture fibreuse réalisée par tissage tridimensionnel avec épaisseur évolutive conformément à la description de la demande FR 2 913 053, le renfort fibreux constituant alors une préforme fibreuse complète du carter de soufflante 1 formée en une seule pièce avec des parties de renfort correspondant aux brides.

Afin de protéger la pièce 1 dans le cas d'une augmentation excessive de la température susceptible de nuire à son bon fonctionnement, notamment en cas de feu, l'invention propose d'appliquer une couche de protection sur ses surfaces 3 à protéger.

En particulier, la couche de protection est configurée pour limiter l'étendue de la zone dégradée par les flammes et favoriser son extinction en limitant le débit calorifique et le champ des températures du gaz dégagé par la dégradation de la matrice principale du matériau composite formant la pièce 1.

Dans le cas du carter de soufflante 1, les surfaces 3 à protéger comprennent principalement la face radiale amont et la face radiale aval de la bride amont 12, la face externe du fût et la face radiale amont de la bride aval 14.

La Demanderesse s'est aperçue qu'il suffisait qu'une petite surface sensible au feu du carter de soufflante 1 soit exposée au feu pour que l'intégralité du carter de soufflante 1 soit dégradée. Ainsi, dans une forme de réalisation, toute surface du carter de soufflante 1 susceptible d'être exposée aux flammes et présentant une longueur suivant la direction X supérieure ou égale à 2 mm est de préférence protégée contre le feu. Par exemple, le sommet de la bride amont 12 présente une longueur axiale supérieure à 2 mm, typiquement de l'ordre de 10 mm. Le sommet de la bride amont 12, qui est effectivement susceptible d'être exposée au feu, est donc de préférence recouvert par une couche de protection 2.

La bride aval 14 en revanche étant habituellement festonnée et donc intrinsèquement mieux protégée contre le feu que la bride amont 12, elle ne requiert pas nécessairement de protection anti-feu et peut donc ne pas être recouverte par une couche de protection 2 contre le feu. Toutefois, la bride aval 14 peut être recouverte à titre préventif.

La couche de protection 2 contre le feu notamment comprend un ou plusieurs lés de préimprégné 20 comprenant un renfort fibreux secondaire densifié par une matrice secondaire.

La couche de protection 2 est de préférence appliquée directement sur la pièce 1, après que celle-ci ait été usinée. Typiquement, dans le cas d'un carter de soufflante 1, la couche de protection 2 peut être appliquée après les étapes de polymérisation de la matrice principale et d'usinage du carter de soufflante 1.

Le lé de préimprégné 20 est tout d'abord préformé S1 de manière à lui conférer une forme correspondant à la forme de la surface 3 de la pièce 1 à protéger contre le feu. Le lé de préimprégné 20 peut ensuite être appliqué S2 sur la ou les surfaces 3 à protéger, puis être fixé S3 sur ces surfaces 3 par un traitement thermique adapté de la pièce 1.

L'étape de préformage S1 du lé de préimprégné 20 permet de réduire significativement le temps nécessaire à l'application S2 du lé 20 sur la pièce 1. De plus, la préforme garantit que l'ensemble de la surface à protéger est couverte, limitant ainsi le besoin de contrôle du travail des opérateurs.

Dans le cas du carter de soufflante 1, qui est de forme annulaire, le lé de préimprégné 20 peut être préformé S1 en secteurs d'anneau. La sectorisation du lé 20 permet ainsi de faciliter son application sur le carter pour former la couche de protection 2 annulaire et recouvrir ainsi l'intégralité de la surface 3 à protéger du carter de soufflante 1.

De préférence, les secteurs d'anneau sont appliqués S2 avec chevauchement (c'est-à-dire avec un recouvrement partiel du secteur d'anneau adjacent) afin d'améliorer la protection anti-feu ainsi que la tenue mécanique de la couche de protection 2 ainsi obtenue.

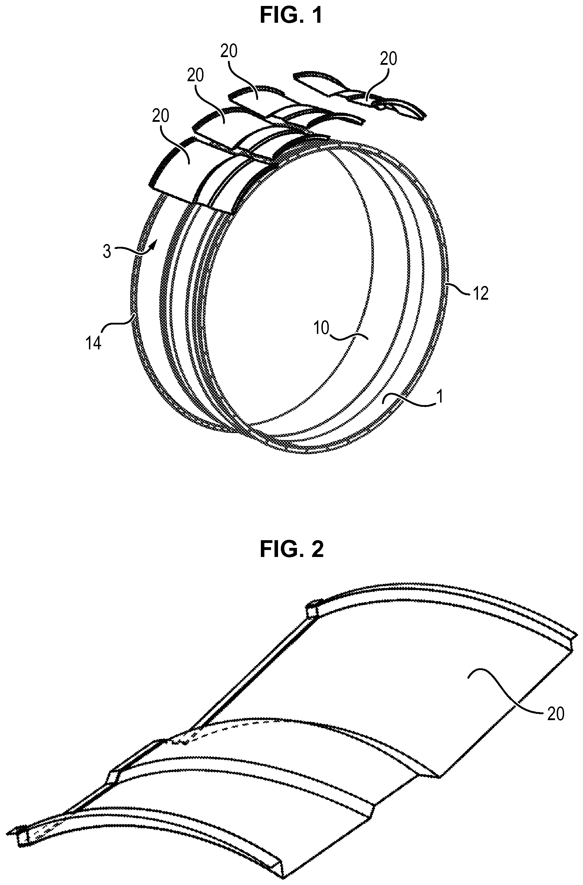

Un exemple de lé de préimprégné 20 en forme de secteurs d'anneau a été illustré en figures 1 et 2.

Le renfort fibreux secondaire comprend de préférence des fibres de verre, tandis que la matrice secondaire peut comprendre une résine capable de protéger thermiquement la pièce 1 contre le feu en créant une lame d'air entre la couche de protection 2, qui est directement exposée au feu, et la pièce 1, et permet de protéger la pièce 1 en réduisant le champ de températures et le débit des gaz de décomposition. Typiquement, les résines les plus adaptées peuvent comprendre des résines capables de gonfler sous l'effet de la chaleur et de délaminer la couche de protection 2 afin de créer la lame d'air isolante et de réduire ainsi le transfert de la chaleur au sein du renfort tridimensionnel. L'étendue de la zone dégradée suite à l'exposition au feu est donc plus limitée et le champ de températures est moins élevé que dans le cas d'une pièce 1 ne comprenant pas une telle couche de protection 2. Etant donné que la couche de protection 2 est la première couche exposée au feu, sa matrice secondaire se dégrade et un délaminage se produit créant ainsi une lame d'air qui protège la pièce 1 et ralentit la propagation du feu.

La résine de la matrice secondaire est en outre choisie de sorte que la fixation S3 du lé de préimprégné 20 sur la pièce 1 puisse être réalisée à une température inférieure à la température de dégradation de la pièce 1. Dans le cas d'un carter de soufflante 1, la température de dégradation de la pièce 1 est de l'ordre de 135°C. Le traitement thermique doit donc pouvoir être réalisé à une température de l'ordre de 120°C à 125°C. En parallèle, afin de ne pas se dégrader au cours du fonctionnement normal du moteur, la résine de la matrice secondaire doit présenter une température de transition vitreuse supérieure à la température de fonctionnement du moteur. Par exemple, la résine peut être de classe thermique 180°C.

Compte-tenu de ce qui précède, la matrice secondaire peut par exemple comprendre une résine epoxy, une résine phénolique et/ou une résine cyanate ester, telle qu'une résine du type HexPly®M26T/50%035.

Le préformage S1 de la couche de protection 2 peut varier en fonction du type de matrice secondaire composant le préimprégné.

Ainsi, pour une matrice secondaire comprenant une résine thermodurcissable, le lé 20 est préformé S11 à une température inférieure à la température de polymérisation de la résine formant la matrice principale du matériau composite de la pièce 1. Le lé 20 présente donc une faible rigidité et peut se conformer à la forme du carter. La fixation S3 du lé de préimprégné 20 à la pièce 1 peut alors être obtenue en réalisant un traitement thermique de la pièce 1 munie du lé de préimprégné 20 afin de polymériser la résine thermodurcissable.

En variante, la matrice secondaire peut comprendre une résine thermoplastique. Dans cette variante de réalisation, le lé 20 est alors préformé S12 à une température supérieure à la température de fusion de la matrice principale du matériau composite de la pièce 1. Le lé 20 obtenu est donc rigide. La fixation S3 du lé de préimprégné 20 à la pièce 1 peut alors être obtenue par collage du lé de préimprégné 20 sur la surface 3 correspondante de la pièce 1, par exemple à l'aide d'une résine thermodurcissable appliquée entre le lé de préimprégné 20 et la surface 3 de la pièce à protéger, telle qu'une résine epoxy. A cet effet, un traitement thermique de la pièce 1 munie du lé de préimprégné 20 est réalisé afin de polymériser la résine thermodurcissable.

Lorsque le lé 20 est appliqué sous forme de secteurs d'anneau, un soyage S13 des secteurs d'anneau peut être réalisé afin d'assurer leur chevauchement.

Quel que soit le type de résine choisi, l'étape S3 de fixation peut être réalisée par traitement thermique (que ce soit pour la polymérisation de la matrice secondaire ou de la colle) à une température inférieure à la température de dégradation de la matrice principale du matériau composite de la pièce 1, et le cas échéant sous pression. Dans le cas où la résine présente une température de polymérisation supérieure à cette température de dégradation, le traitement thermique est donc réalisé à une température inférieure à la température de polymérisation de la résine. Par conséquent, la durée du traitement thermique doit être adaptée afin de garantir la polymérisation de la résine.

Par exemple, pour un carter de soufflante 1 conventionnel, la température de dégradation de la pièce 1 est de l'ordre de 135°C. Le traitement thermique peut donc être réalisé à une température de l'ordre de 120°C à 125°C pendant un temps de cycle relativement long, de préférence supérieur à 4h, afin de garantir la polymérisation de la résine thermodurcissable ou de la colle, selon le type de matrice secondaire choisi.

De préférence, plusieurs lés 20 sont superposés afin de former la couche de protection 2.

Lorsque les lés 20 sont appliqués en secteurs d'anneau sur la pièce 1, chaque secteur d'anneau peut donc comprendre plusieurs lés 20 superposés et préformés. Les lés de préimprégné 20 préformés sont alors appliqués sur le carter de soufflante 1, puis fixé par traitement thermique.

Le nombre de lés 20 superposés peut dépendre de la dimension de la pièce 1, de la capacité du préimprégné choisi à retarder ou du moins ralentir un début de feu, ainsi que du poids total de la couche de protection 2 ainsi obtenue. Par exemple, dans le cas d'un carter de soufflante 1, deux lés 20 peuvent être superposés dans chaque secteur d'anneau de la couche de protection 2 afin de protéger efficacement le carter de soufflante 1 du feu.

## Revendications

1. Procédé de protection (S) contre le feu d'une pièce (1) d'un moteur de turbine à gaz réalisée dans un matériau composite comprenant un renfort fibreux principal densifié par une matrice principale,
le procédé de protection (S) comprenant les étapes suivantes :
- préformage (S1) d'un lé de préimprégné (20) de manière à lui conférer une forme correspondant à la forme d'une surface (3) de la pièce (1) à protéger contre le feu, ledit lé de préimprégné (20) comprenant un renfort fibreux secondaire densifié par une matrice secondaire,
- application (S2) du lé de préimprégné (20) ainsi préformé sur la pièce (1), et
- fixation (S3) du lé de préimprégné (20) sur la surface (3) par traitement thermique de la pièce (1) munie dudit lé de préimprégné (20) afin d'obtenir une couche de protection (2) contre le feu.

2. Procédé de protection (S) selon la revendication 1, dans lequel le traitement thermique est réalisé à une température inférieure à une température de dégradation de la pièce (1).

3. Procédé de protection (S) selon l'une des revendications 1 ou 2, dans lequel le renfort fibreux secondaire comprend des fibres de verre.

4. Procédé de protection (S) selon l'une des revendications 1 à 3, dans lequel la matrice secondaire comprend une résine epoxy, une résine phénolique et/ou une résine cyanate ester.

5. Procédé de protection (S) selon l'une des revendications 1 à 4, dans lequel le lé de préimprégné (20) est préformé par secteurs d'anneau, lesdits secteurs d'anneau étant appliqués sur la surface (3) de la pièce (1) à protéger avec chevauchement.

6. Procédé de protection (S) selon l'une des revendications 1 à 5, dans lequel la matrice secondaire comprend une résine thermoplastique et l'étape de préformage (S1) comprend les sous-étapes suivantes :
- préformage (S12) du lé de préimprégné (20) à une température supérieure à la température de transition vitreuse de la résine thermodurcissable, afin de lui conférer la forme de la surface (3) de la pièce (1) à protéger,
- application (S14) d'un film de colle entre le lé de préimprégné (20) préformé et la surface (3) de la pièce (1) à protéger,
et dans lequel l'étape de fixation (S3) par traitement thermique est configurée pour polymériser le film de colle.

7. Procédé de protection (S) selon les revendications 5 et 6 prises en combinaison, comprenant en outre une sous-étape (S13) au cours de laquelle on réalise un soyage sur les secteurs d'anneau afin d'assurer le chevauchement des secteurs d'anneau entre eux.

8. Procédé de protection (S) selon l'une des revendications 1 à 5, dans lequel la matrice secondaire comprend une résine thermodurcissable et l'étape de préformage (S2) comprend une sous-étape de préformage (S11) du lé de préimprégné (20) à une température inférieure à la température de polymérisation de la matrice principale, afin de lui conférer la forme de la surface (3) de la pièce (1) à protéger, et dans lequel l'étape de fixation (S3) par traitement thermique est configurée pour polymériser la résine thermodurcissable.

9. Procédé de protection (S) selon l'une des revendications 1 à 8, dans lequel la couche de protection (2) comprend deux lés de préimprégné (20) superposés.

10. Procédé de protection (S) selon la revendication 9, dans lequel les lés de préimprégné (20) sont superposés et préformés simultanément au cours de l'étape de préformage (S1).

## Patentansprüche

1. Brandschutzverfahren (S) eines Teils (1) eines Gasturbinenmotors, hergestellt aus einem Verbundmaterial, umfassend eine von einer Hauptmatrix verdichtete Hauptfaserverstärkung,
wobei das Schutzverfahren (S) die folgenden Schritte umfasst:
- Vorformen (S1) einer vorimprägnierten Bahn (20) derart, dass ihr eine Form verliehen wird, die der Form einer Fläche (3) des vor Brand zu schützenden Teils (1) entspricht, wobei die vorimprägnierte Bahn (20) eine von einer Hauptmatrix verdichtete sekundäre Faserverstärkung umfasst,
- Auflegen (S2) der derart vorgeformten vorimprägnierten Bahn (20) auf dem Teil (1), und
- Befestigen (S3) der vorimprägnierten Bahn (20) auf der Fläche (3) durch thermische Behandlung des mit der vorimprägnierten Bahn (20) ausgestatteten Teils (1), um eine Brandschutzschicht (2) zu erhalten.

2. Schutzverfahren (S) nach Anspruch 1, wobei die thermische Behandlung bei einer Temperatur unter einer Beeinträchtigungstemperatur des Teils (1) durchgeführt wird.

3. Schutzverfahren (S) nach einem der Ansprüche 1 oder 2, wobei die sekundäre Faserverstärkung Glasfasern umfasst.

4. Schutzverfahren (S) nach einem der Ansprüche 1 bis 3, wobei die sekundäre Matrix ein Epoxydharz, ein Phenolharz und/oder ein Cyanatesterharz umfasst.

5. Schutzverfahren (S) nach einem der Ansprüche 1 bis 4, wobei die vorimprägnierte Bahn (20) in Ringsektoren vorgeformt ist, wobei die Ringsektoren auf der Fläche (3) des zu schützenden Teils (1) überlappend aufgelegt werden.

6. Schutzverfahren (S) nach einem der Ansprüche 1 bis 5, wobei die sekundäre Matrix ein thermoplastisches Harz umfasst und der Vorformschritt (S1) die folgenden Unterschritte umfasst:
- Vorformen (S12) der vorimprägnierten Bahn (20) bei einer Temperatur über der Glasübergangstemperatur des duroplastischen Harzes, um ihr die Form der Fläche (3) des zu schützenden Teils (1) zu verleihen,
- Auftragen (S14) eines Klebstofffilms zwischen der vorgeformten vorimprägnierten Bahn (20) und der Fläche (3) des zu schützenden Teils (1),
und wobei der Befestigungsschritt (S3) durch thermische Behandlung konfiguriert ist, um den Klebstofffilm zu polymerisieren.

7. Schutzverfahren (S) nach den Ansprüchen 5 und 6, herangezogen in Kombination, umfassend ferner einen Unterschritt (S13), bei dem eine Kragenbildung auf den Ringsektoren durchgeführt wird, um die Überlappung der Sektoren untereinander sicherzustellen.

8. Schutzverfahren (S) nach einem der Ansprüche 1 bis 5, wobei die sekundäre Matrix ein duroplastisches Harz umfasst und der Vorformschritt (S2) einen Vorform-Unterschritt (S11) der vorimprägnierten Bahn (20) bei einer Temperatur unter der Polymerisationstemperatur der Hauptmatrix umfasst, um ihr die Form der Fläche (3) des zu schützenden Teils (1) zu verleihen, und wobei der Befestigungsschritt (S3) durch thermische Behandlung konfiguriert ist, um das duroplastische Harz zu polymerisieren.

9. Schutzverfahren (S) nach einem der Ansprüche 1 bis 8, wobei die Schutzschicht (2) zwei übereinanderliegende vorimprägnierte Bahnen (20) umfasst.

10. Schutzverfahren (S) nach Anspruch 9, wobei die vorimprägnierten Bahnen (20) übereinandergelegt sind und während des Vorformschritts (S1) gleichzeitig vorgeformt werden.

## Claims

1. A fire protection method (S) for a part (1) of a gas turbine engine, made of a composite material comprising a main fiber reinforcement densified by a main matrix,
the protection method (S) comprising the following steps:
- preforming (S1) of a prepreg panel (20) so as to impart a shape corresponding to the shape of a surface (3) of the part (1) to be protected against fire, said prepreg panel (20) comprising a secondary fiber reinforcement densified by a secondary matrix,
- applying (S2) the prepreg panel (20) thus preformed onto the part (1), and
- fastening (S3) of the prepreg panel (20) onto the surface (3) by heat treatment of the part (1) fitted with said prepreg panel (20) to produce a protective layer (2) against fire.

2. The protection method (S) according to claim 1, wherein the heat treatment is performed at a temperature less than a degradation temperature of the part (1).

3. The protection method (S) according to one of claims 1 or 2, wherein the secondary fiber reinforcement comprises glass fibers.

4. The protection method (S) according to one of claims 1 to 3, wherein the secondary matrix comprises an epoxy resin, a phenolic resin and/or a cyanate ester resin.

5. The protection method (S) according to one of claims 1 to 4, wherein the prepreg panel (20) is preformed by ring sectors, said ring sectors being applied onto the surface (3) of the part (1) to be protected with overlapping.

6. The protection method (S) according to one of claims 1 to 5, wherein the secondary matrix comprises a thermoplastic resin and the preforming step (S1) comprises the following sub-steps:
- preforming (S12) of the prepreg panel (20) at a temperature greater than the glass transition temperature of the thermosetting resin to impart the shape of the surface (3) of the part (1) to be protected,
- applying (S14) a film of adhesive between the preformed prepreg panel (20) and the surface (3) of the part (1) to be protected,
and wherein the fastening step (S3) by heat treatment is configured to polymerize the film of adhesive.

7. The protection method (S) according to claims 5 and 6 taken in combination, further comprising a sub-step (S13) during which joggling on the ring sectors is performed to ensure overlapping of the ring sectors on each other.

8. The protection method (S) according to one of claims 1 to 5, wherein the secondary matrix comprises a thermosetting resin and the preforming step (S2) comprises a sub-step of preforming (S11) the prepreg panel (20) at a temperature less than the polymerization temperature of the main matrix to impart the shape of the surface (3) of the part (1) to be protected, and wherein the fastening step (S3) by heat treatment is configured to polymerize the thermosetting resin.

9. The protection method (S) according to one of claims 1 to 8, wherein the protective layer (2) comprises two superposed prepreg panels (20).

10. The protection method (S) according to claim 9, wherein the prepreg panels (20) are superposed and preformed simultaneously during the preforming step (S1).
